# EUROPÄISCHE PATENTSCHRIFT

(11) **EP 2 155 354 B1**
(45) Veröffentlichungstag und Bekanntmachung des Hinweises auf die Patenterteilung: **01.12.2010**
(21) Anmeldenummer: 08758997.4
(22) Anmeldetag: 04.06.2008
(51) Int. Cl.: B01D 35/027, B01D 36/04, B01D 21/00

(54) **VORRICHTUNG ZUM PFLEGEN, FILTRIEREN UND/ODER REINIGEN EINES MEDIUMS**
DEVICE FOR MAINTAINING, FILTERING, AND/OR CLEANING A MEDIUM
SYSTÈME POUR ENTRETENIR, FILTRER ET/OU NETTOYER UN FLUIDE

(30) Priorität: 06.06.2007 DE 202007008129 U
(43) Veröffentlichungstag der Anmeldung: 24.02.2010
(73) Patentinhaber: GKD-Gebr. Kufferrath AG, 78532 Tuttlingen (DE)
(72) Erfinder: COMBROWSKI, Zbigniew, 78532 Tuttlingen (DE)
(74) Vertreter: Liermann - Castell
(86) Internationale Anmeldenummer: PCT/EP2008/004438
(87) Internationale Veröffentlichungsnummer: WO 2008/148531

(56) Entgegenhaltungen:
- WO-A-2005/094964
- DE-U1- 29 824 064
- US-A- 5 407 584

## Beschreibung

Die Erfindung betrifft eine Vorrichtung zum Pflegen, Filtrieren und/oder Reinigen eines Mediums mit zumindest einer Filtereinrichtung, wobei der Filtereinrichtung ein Behälter zur Aufnahme des zu reinigenden Mediums und/oder ein Behälter zur Aufnahme des gereinigten Mediums zugeordnet ist/sind.

### Stand der Technik

In vielen industriellen Und/oder privaten Bereichen ist es notwendig, ein Medium, insbesondere ein flüssiges Medium zu reinigen. Im industriellen Bereich gehören hierzu insbesondere Kühlschmiermittel, Öle, Schleifwässer, KFZ-Waschwässer und Waschbäder, Wässer aus der Pharmaindustrie oder Chemie bzw. aus der Lebensmittelherstellung. Dies sind aber nur Beispiele.

Aus der DE 101 40 709 A1 ist beispielsweise bekannt, dass das Medium über zumindest eine Leitung zumindest einem Filter zugeführt wird, wobei der Filter zumindest eine Filterfläche ausbildet, welche von dem Arbeitsmedium durchströmt wird. Danach gelangt das Filtrat zu einem Filtratausgang, während die ausgefilterten Teilchen zu einer Sedimentationskammer verbracht werden. Dort sinken die ausgefilterten Partikel nach unten, verbacken miteinander und werden dann durch ein Ventil, einen Schieber oder eine pneumatische, mechanische oder hydraulische Klappe entnommen. Denkbar ist auch, dass sie durch einen Austragskolben ausgeschoben werden.

Ferner ist aus der WO 2005/094964 A2 ein Verfahren und eine Vorrichtung zum Pflegen, Filtrieren und Reinigen eines Arbeitsmediums mit zumindest einem Filter in einem Filtergehäuse bekannt, an welches eine Austragseinrichtung für einen Filterkuchen anschliesst. Die herausgefilterten Teilchen sollen in der Austragseinrichtung in Stufen zum Filterkuchen verpresst und der verpresste Filterkuchen nach Erreichen einer vorbestimmten Dicke ausgetragen werden.

### Aufgabe der vorliegenden Erfindung

Aufgabe der vorliegenden Erfindung ist es, eine Vorrichtung der oben genannten Art zu entwickeln, bei der die gesamte Filtration des Mediums effektiver und effizienter ausgestaltet wird.

### Lösung der Aufgabe

Zur Lösung der Aufgabe führt, dass die Behälter ineinander angeordnet sind.

Bislang wurde das zu reinigende Medium in einem Behälter vor dem Filter gesammelt. Dies war meist ein separater Behälter, aus dem das zu reinigende Medium dann über eine entsprechende Leitung entnommen und der Filtereinrichtung zugeführt wurde. Ebenso wurde nach der Filtration das gereinigte Medium in einem Behälter gesammelt und wieder seinem alten Bestimmungszweck zugeführt oder entsorgt.

Die vorliegende Erfindung hat nun den Vorteil, dass die beiden Behälter ineinander angeordnet sind, so dass sie zusammen mit der Filtereinrichtung eine Einheit bilden können. Hierdurch wird nicht nur Platz gespart, sondern die gesamte Filtration kann wesentlich effizienter durchgeführt werden. Durch die Auswahl von Behältern mit unterschiedlicher Höhe entsteht ein modulares Tanksystem, das gewünschten Anforderungen an die Menge bzw. Kapazität gerecht wird.

Die entsprechende Speichereinrichtung, die somit einen Innenbehälter und einen Aussenbehälter aufweist, kann als eine Einheit mit der Filtereinrichtung verbunden werden. Das zu reinigende Medium gelangt direkt von beispielsweise einer Arbeitsmaschine in den Behälter zur Aufnahme des zu reinigenden Mediums, wobei dort für entsprechende grobe Teile dem entsprechenden Einlass ein Gitterkorb vorgeschaltet ist, der diese groben Teile aus dem zu reinigenden Medium ausfiltert.

Der Behälter selbst besteht bevorzugt aus einem oberen zylindrischen Bereich, an den sich ein Konusbereich anschliesst, der nach unten einen Boden ausbildet. Diese Ausgestaltung gewährleistet, dass die entsprechenden Verunreinigungen in dem zu reinigenden Medium sehr gut zentrisch im Konus sedimentieren können, so dass keine Ablagerungen am Tankboden, wie bei Flachbodentanks üblich, stattfinden. Weil die Filterpumpe kontinuierlich im Konusbereich den Schlamm absaugt und dem Filter diesen Schlamm mit einer optimalen Partikelverteilung zuführt, kann auf Filterhilfsmittel zur Erreichung einer bestimmten Filterqualität verzichtet werden.

Ferner ist hervorzuheben, dass die Schmutz- und Saubertankentleerung am tiefsten Punkt in beiden Behältern stattfindet, so dass auch z.B. Schmutzwasser, das durch Kühlung entsteht, wenn mit Öl gearbeitet wird, abgezogen werden kann.

Bevorzugt befindet sich der Behälter zur Aufnahme des zu reinigenden Mediums in dem Behälter zur Aufnahme des gereinigten Mediums. In diesem Fall wird der Behälter zur Aufnahme des gereinigten Mediums im wesentlichen durch einen Zylindermantel gebildet, welcher in einem Abstand den Behälter zur Aufnahme des zu reinigenden Mediums umgibt, wobei dieser Zylindermantel etwa auf der Hälfte der Speichereinrichtung über einen Schrägboden mit dem Behälter zur Aufnahme des zu reinigenden Mediums verbunden ist. Selbstverständlich ist auch eine umgekehrte Anordnung möglich.

In dem Zylindermantel selbst befinden sich im unteren Bereich Führungen zur Aufnahme der Gabel eines Gabelstaplers, damit die gesamte Speichereinrichtung leicht versetzt werden kann.

Des weiteren ist vorgesehen, dass dem Zylindermantel eine Rutsche für Filterkuchen zugeordnet ist, die aus der Filtereinrichtung ausgestossen werden.

Der gesamte Transport des zu reinigenden Mediums und des gereinigten Mediums geschieht durch entsprechende Pumpen, die in beliebiger Art und Weise ausgestaltet und angeordnet sein können.

Bevorzugt ist noch vorgesehen, dass das gereinigte Medium, bevor es wieder seiner Bestimmung übergehen wird, gekühlt wird. Hierzu ist es möglich, beispielsweise in dem Behälter für gereinigtes Medium entsprechende Kühlschlangen anzuordnen. Es ist aber auch denkbar, dass der Zylindermantel doppelwandig ausgebildet ist und sich: in dem Zwischenraum zwischen den beiden Wänden ein Kühlmittel befindet. Vorteil dieser runden Behälterausführung ist, dass es keine Todzonen gibt und das Medium optimal zirkuliert und somit mit weniger Energie schneller gekühlt wird.

In einem bevorzugten Ausführungsbeispiel der Erfindung handelt es sich bei der Filtereinrichtung um eine solche, wie sie in der WO 2005/094964 A2 beschrieben ist. Jedoch sind auch andere Filtereinrichtungen denkbar und sollen von der vorliegenden Erfindung umfasst sein.

Von der vorliegenden Erfindung wird auch ein Verfahren zum Pflegen, Filtrieren und/oder Reinigen eines Mediums mit zumindest einer Filtereinrichtung umfasst, wobei der Filtereinrichtung ein Behälter zur Aufnahme des zu reinigenden Mediums und/oder ein Behälter zur Aufnahme des gereinigten Mediums zugeordnet ist/sind. Das zu reinigende Medium sedimentiert zumindest teilweise in dem Behälter zur Aufnahme des zu reinigenden Mediums und wird danach der Filtereinrichtung zugeführt, von der das gereinigte Medium in den Behälter für das gereinigte Medium gelangt, wobei die beiden Behälter und die Filtereinrichtung eine Einheit bilden.

Selbstverständlich findet in beiden Behältern eine Niveaumessung statt. Trotzdem ist noch bevorzugt ein Havarieschutz vorgesehen, indem der Rand des äusseren Behälters höher gezogen und/ oder ein Innenring auf der Höhe der oberen Randkante des inneren Behälters innen am Zylindermantel vorgesehen ist.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht einer erfindungsgemässen Vorrichtung zum Pflegen, Filtrieren und/oder Reinigen eines Mediums;
Figur 2 einen schematisch dargestellten Längsschnitt durch eine erfindungsgemässe Speichereinrichtung der Vorrichtung gemäss Figur 1;
Figur 3 eine perspektivische Ansicht der Speichereinrichtung gemäss Figur 2 schräg von oben; und
Figur 4 eine perspektivische Seitenansicht der Speichereinrichtung gemäss Figur 2 schräg von unten.

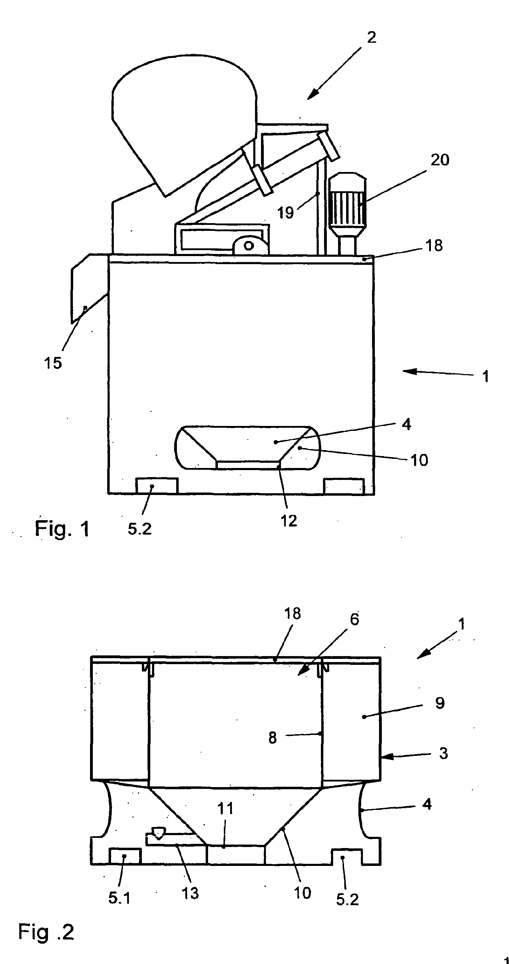

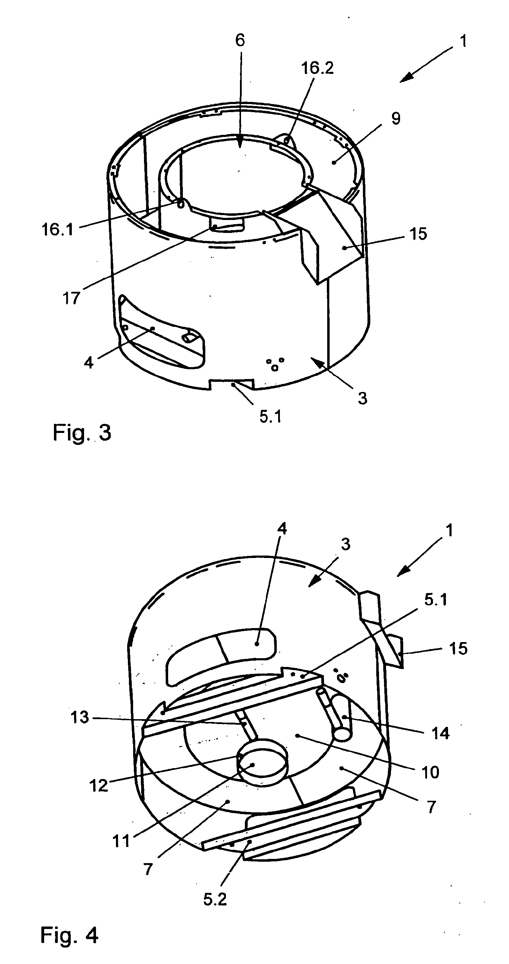

Eine erfindungsgemässe Vorrichtung zum Pflegen, Filtrieren und/oder Reinigen eines Mediums weist eine Speichereinrichtung 1 und eine Filtereinrichtung 2 auf. Als Filtereinrichtung wird eine Vorrichtung benutzt, wie sie in der WO 2005/094964 A2 beschrieben ist, weshalb vorliegend auf eine nähere Beschreibung verzichtet wird. Für die vorliegende Erfindung ist vor allem die Speichereinrichtung 1 wichtig, die in den Figuren 2 bis 4 gezeigt ist.

Diese Speichereinrichtung 1 weist einen äusseren Zylindermantel 3 auf. Diester besitzt vor allem im unteren Bereich Durchbrechungen 4 und zwei Führungen 5.1 und 5.2 zur Aufnahme einer Gabel von beispielsweise einem Gabelstapler.

Der Zylindermantel 3 umschliesst einen Behälter 6 zur Aufnahme des zur reinigenden Mediums. Etwa mittig verläuft vom Zylindermantel 3 nach innen zum Behälter 6 hin ein Schrägboden 7, durch den zwischen einem zylindrischen Bereich 8 des Behälters 6 und einem Teil des Zylindermantels 3 ein weiterer Behälter 9 zur Aufnahme des gereinigten Mediums ausgebildet wird. Beide Behälter 6 und 9 werden in Gebrauchslage nach oben durch einen Deckel 18 verschlossen, wobei sich in dem Deckel 18 entsprechende, nicht näher gezeigte Öffnungen zum Einfüllen des zu reinigenden Mediums und zur Entnahme des gereinigten Mediums befinden, wobei dieses auch über Ablässe 13 und 14 möglich ist.

Der Behälter 6 zur Aufnahme des zu reinigenden Mediums weist nach dem zylindrischen Bereich 8 einen Konusbereich 10 auf, an den ein Boden 11 anschliesst. Über einen Stützstutzen 12 stützt sich dann dieser Behälter 6 gegen einen nicht näher gezeigten Untergrund ab.

Nahe dem Boden 11 beim Übergang zum Konusbereich 10 ist für den Behälter 6 der Ablass 13 vorgesehen. Der weiterer Ablass 14 ist in den Schrägboden 7 eingesetzt.

In die Speichereinrichtung 1 ist ferner eine Rutsche 15 eingesetzt, welche der zielgerichteten Beförderung von Filterkuchen aus der Filtereinrichtung 2 dient. Des weiteren sind an dem Behälter 6 Transportösen 16.1 und 16.2 erkennbar, in die ein entsprechendes Hebezeug eingehängt werden kann.

Zwischen dem Behälter 6 und dem Behälter. 9 können auch Überläufe 17 vorgesehen werden, wobei allerdings die Befüllung der beiden Behälter 6 und 9 so gesteuert wird, dass zwar ein Überlauf von dem Behälter 9 in den Behälter 6 möglich ist, jedoch nicht umgekehrt. Dadurch wird gewährleistet, dass kein noch zu reinigendes Medium in das bereits gereinigte Medium gelangt.

Die Funktionsweise der vorliegenden Erfindung ist folgende:

Durch eine nicht näher gezeigte Einlassöffnung in dem Deckel 18 wird das zu reinigenden Medium in den Behälter 6 eingefüllt. Dabei kann es sich als ratsam erweisen, diesem Einlass noch einen Gitterkorb zuzuordnen, in dem sehr grobe Partikel, die sich in dem zu reinigenden Medium befinden, gefangen werden. Der Einlass ist dabei bevorzugt so angeordnet, dass sich zumindest während dem Einlass das Medium in dem Behälter 6 dauernd in Bewegung befindet. Durch die Ausgestaltung des Behälters 6 und die glatten Wände findet eine Sedimentierung zum Konusboden in dem Behälter 6 statt, so dass es in dem Behälter 6 kaum zu Ablagerungen kommt, da die Sedimente nach unten zum Boden 11 hin absinken. Es findet eine sehr konstante Partikelverteilung statt und keine Verschlammung, weil diese Partikel im Konus bereits sofort abgepumpt werden.

Durch eine nicht näher gezeigte Pumpe wird das so vorgereinigte Medium dem Behälter 6 entnommen und der Filtereinrichtung 2 zugeführt. Dort findet eine sehr weitreichende Filtrierung statt, wie dies in der WO 2005/094964 A2 beschrieben ist. Die entsprechenden verpressten Filterkuchen oder Filterpakete werden über die Rutsche 15 ausgetragen.

Das so gereinigte Medium gelangt über eine Leitung 19 in den Behälter 9 zur Aufnahme des gereinigten Mediums und kann dort durch eine Pumpe 20 einer weiteren Verwendung zugeführt werden.

Bevorzugt befinden sich in dem Behälter 9 Kühlschlangen, die von dem bereits gereinigten Medium umspült werden. Hierbei findet eine sehr effektive Kühlung des gereinigten Mediums statt. Desgleichen ist aber auch daran gedacht, den Zylindermantel 3 in diesem Bereich doppelwandig auszubilden, so dass in der Doppelwand ein Kühlmedium geführt werden kann. Dabei macht sich die Erfindung die sehr hohe Innenfläche des Behälters 9 zunutze, so dass ein Energiebedarf für die Kühlung sehr gering ist.

Bevorzugt wird das gereinigte Medium tangential in den Behälter 9 eingebracht, so dass es in Bewegung gehalten und damit die Kühlung effektiver wird. Ferner sind bevorzugt im unteren Bereich des Behälters 9 nicht gezeigte Schottbleche vorgesehen, die in unterschiedlichem Abstand zum Schrägboden 7 hin enden können und einen unterschiedlich grossen Durchlass freilassen. Diese Schottbleche können von leichteren Fremdölen, die am Aufsteigen sind, nicht überwunden werden, steigen an dem Schottblech entlang auf und können abgesaugt werden.

Bevorzugt sind vor der Ausbringstelle für das gereinigte Medium zwei Schottbleche vorgesehen, in deren Zwischenraum sich das von Fremdöl gereinigte Medium befindet und entnommen werden kann.

Vorzugsweise formen die beiden Schottbleche Durchlässe unterschiedlicher Höhe mit dem Schrägboden aus.

**Bezugszeichenliste**

| | | | | | |
|---|---|---|---|---|---|
| 1 | Speichereinrichtung | 34 | | 67 | |
| 2 | Filtereinrichtung | 35 | | 68 | |
| 3 | Zylindermantel | 36 | | 69 | |
| 4 | Durchbrechung | 37 | | 70 | |
| 5 | Führung | 38 | | 71 | |
| 6 | Behälter | 39 | | 72 | |
| 7 | Schrägboden | 40 | | 73 | |
| 8 | Zylindrischen Bereich | 41 | | 74 | |
| 9 | Behälter | 42 | | 75 | |
| 10 | Konusbereich | 43 | | 76 | |
| 11 | Boden | 44 | | 77 | |
| 12 | Stützstutzen | 45 | | 78 | |
| 13 | Auslass | 46 | | 79 | |
| 14 | Ablass | 47 | | | |
| 15 | Rutsche | 48 | | | |
| 16 | Transportöse | 49 | | | |
| 17 | Überlauf | 50 | | | |
| 18 | Deckel | 51 | | | |
| 19 | Leitung | 52 | | | |
| 20 | Pumpe | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Pflegen, Filtrieren und/oder Reinigen eines flüssigen Mediums mit zumindest einer Filtereinrichtung (2), mit einem Behälter (6) zur Aufnahme des zu reinigenden Mediums, der in einem Behälter (9) zur Aufnahme des gereinigten Mediums angeordnet ist,
**dadurch gekennzeichnet,**
**dass** die Behälter (6, 9) in Gebrauchslage nach oben durch einen Deckel (18) verschlossen sind und der Deckel (18) zwischen der Filtereinrichtung (2) und den Behältern (6, 9) angeordnet ist, wobei ein in dem Behälter (6) vorgereinigtes Medium der Filtereinrichtung (2) zugeführt wird, in der eine weitreichende Filtrierung stattfindet, und dann über eine Leitung (19) in den Behälter (9) zur Aufnahme des gereinigten Mediums gelangt.

2. Vorrichtung nach Anspruch 1, **dadurch gekennzeichnet, dass** sich am Einlass für das zu reinigende Medium in den Behälter (6) zur Aufnahme des zu reinigenden Mediums ein Gitterkorb befindet.

3. Vorrichtung nach wenigstens einem der Ansprüche 1 oder 2, **dadurch gekennzeichnet, dass** der Behälter (6) zur Aufnahme des zu reinigenden Mediums einen oberen zylindrischen Bereich (8) aufweist, an den ein Konusbereich (10) und an diesen ein Boden (11) anschliesst.

4. Vorrichtung nach Anspruch 3, **dadurch gekennzeichnet, dass** naher dem Boden (11) ein Auslass (13) vorgesehen ist.

5. Vorrichtung nach wenigstens einem der Ansprüche 1 bis 4, **dadurch gekennzeichnet, dass** der Behälter (9) zur Aufnahme des gereinigten Mediums einen Schrägboden (7) aufweist.

6. Vorrichtung nach Anspruch 5, **dadurch gekennzeichnet, dass** dem Schrägboden (7) eine Ablasseinrichtung (14) zugeordnet ist,

7. Vorrichtung nach wenigstens einem der Ansprüche 1 bis 6, **dadurch gekennzeichnet, dass** der Behälter (6) zur Aufnahme des zu reinigenden Mediums von einem Zylindermantel (3) umfangen ist.

8. Vorrichtung nach Anspruch 7, **dadurch gekennzeichnet, dass** im unteren Bereich des Zylindermantels (3) Führungen (5.1, 5.2) zur Aufnahme einer Gabel eines Staplers vorgesehen sind.

9. Vorrichtung nach Anspruch 7 oder 8, **dadurch gekennzeichnet, dass** dem Zylindermantel (3) eine Rutsche (15) für Filterkuchen zugeordnet ist.

10. Vorrichtung nach wenigstens einem der Ansprüche 1 bis 9, **dadurch gekennzeichnet, dass** dem Behälter (6) zur Aufnahme des zu reinigenden Mediums und/oder dem Behälter (9) zur Aufnahme des gereinigten Mediums eine Pumpe (20) zugeordnet ist.

11. Vorrichtung nach wenigstens einem der Ansprüche 1 bis 10, **dadurch gekennzeichnet, dass** zwischen dem Behälter (6) zur Aufnahme des zu reinigenden Mediums und dem Behältern (9) zur Aufnahme des gereinigten Mediums zumindest ein Überlauf (17) vorhanden ist.

12. Vorrichtung nach wenigstens einem der Ansprüche 1 bis 11, **dadurch gekennzeichnet, dass** in dem Behälter (6) zur Aufnahme des zu reinigenden Mediums und/oder in dem Behälter (9) zur Aufnahme des gereinigten Mediums eine Einrichtunglen zum Kohlen des Mediums vorgesehen ist/sind.

13. Vorrichtung nach wenigstens einem der Ansprüche 1 bis 12, **dadurch gekennzeichnet, dass** in dem Behälter (9) zur Aufnahme des gereinigten Mediums zumindest ein Schottblech vorgesehen ist, welches mit dem Schrägboden (7) einen Durchlass ausbildet.

14. Vorrichtung nach Anspruch 13, **dadurch gekennzeichnet, dass** zwei Schottbleche vor der Einbringstelle des gereinigten Mediums vorgesehen sind.

15. Verfahren zum Pflegen, Filtrieren und/oder Reinigen eines flüssigen Mediums in einer Vorrichtung gemäss einem der Ansprüche 1 - 14, wobei das Medium von einem Behälter (6) zur Aufnahme des zu reinigenden Mediums durch die Filtereinrichtung (2) hindurch zu einem Behälter (9) zur Aufnahme des gereinigten Mediums geführt wird, wobei das zu reinigende Medium in dem Behälter (6) zur Aufnahme des zu reinigenden Mediums zumindest teilweise sedimentiert und danach der Filtereinrichtung (2) zugeführt wird, und wobei das gereinigte Medium tangential in den Behälter (9) für das gereinigte Medium geführt wird.

## Claims

1. An apparatus for caring for, filtering and/or cleaning a liquid medium with at least one filtering device (2), with a container (6) for receiving the medium to be cleaned which is disposed in a container (9) for receiving the cleaned medium, ***characterized in that,*** in a position of use, the containers (6, 9) are closed at the top by a cover (18) and that the cover (18) is positioned between the filtering device (2) and the containers (6, 9), a medium that has been pre-cleaned in the container (6) being led to the filtering device (2) where it is extensively filtered and subsequently reaches via a duct (19) the container (9) for receiving the cleaned medium.

2. The apparatus according to claim 1, ***characterized in that*** a lattice cage is disposed at the inlet of the medium to be cleaned to the container (6) for receiving the medium to be cleaned.

3. The apparatus according to at least one of the claims 1 or 2, ***characterized in that*** the container (6) for receiving the medium to be cleaned has an upper cylindrical area (8) followed by a conical area (10) which is in turn followed by a bottom (11).

4. The apparatus according to claim 3, ***characterized in that*** an outlet (13) is provided close to the bottom (11).

5. The apparatus according to at least one of the claims 1 to 4, ***characterized in that*** the container (9) for receiving the cleaned medium has a sloped bottom (7).

6. The apparatus according to claim 5, ***characterized in that*** a discharge device (14) is attached to the sloped bottom (7).

7. The apparatus according to at least one of the claims 1 to 6, ***characterized in that*** the container (6) for receiving the medium to be cleaned is surrounded by a cylindrical mantle (3).

8. The apparatus according to claim 7, ***characterized in that*** guides (5.1, 5.2) are provided in the lower area of the cylindrical mantle (3) for receiving a fork of a forklift.

9. The apparatus according to claim 7 or 8, ***characterized in that*** a chute (15) for filter cakes is attached to the cylindrical mantle (3).

10. The apparatus according to at least one of the claims 1 to 9, ***characterized in that*** a pump (20) is attached to the container (6) for receiving the medium to be cleaned and/or to the container (9) for receiving the cleaned medium.

11. The apparatus according to at least one of the claims 1 to 10, ***characterized in that*** at least one spillway (17) is available between the container (6) for receiving the medium to be cleaned and the container (9) for receiving the cleaned medium.

12. The apparatus according to at least one of the claims 1 to 11, ***characterized in that*** one or more devices for cooling the medium is/are provided in the container (6) for receiving the medium to be cleaned and/or in the container (9) for receiving the cleaned medium.

13. The apparatus according to at least one of the claims 1 to 12, ***characterized in that*** at least one stiffening plate, which forms an aperture with the sloped bottom (7), is provided in the container (9) for receiving the cleaned medium.

14. The apparatus according to claim 13, ***characterized in that*** two stiffening plates are provided before the inlet of the cleaned medium.

15. A method for caring for, filtering and/or cleaning a liquid medium in an apparatus according to one of the claims1 to 14, the medium being led from a container (6) for receiving the medium to be cleaned through the filtering device (2) to a container (9) for receiving the cleaned medium, the medium to be cleaned sedimenting at least partially in the container (6) for receiving the medium to be cleaned and being then led to the filtering device (2) and the cleaned medium being led tangentially to the container (9) for the cleaned medium.

## Revendications

1. Dispositif pour entretenir, filtrer et/ou nettoyer un médium liquide avec au moins un organe de filtrage (2), avec un contenant (6) pour recevoir le médium à nettoyer qui est disposé dans un contenant (9) pour recevoir le médium nettoyé, ***caractérisé en ce que*** les contenants (6, 9) en position d'usage sont fermés en haut par un couvercle (18) et que le couvercle (18) est disposé entre l'organe de filtrage (2) et les contenants (6, 9), où un médium pré-nettoyé dans le contenant (6) est conduit vers l'organe de filtrage (2) dans lequel s'opère un filtrage étendu et atteint ensuite à travers un conduit (19) le contenant (9) pour recevoir le médium nettoyé.

2. Dispositif selon la revendication 1, ***caractérisé en ce qu*'**une corbeille en treillis se trouve au niveau de l'admission du médium à nettoyer dans le contenant (6) pour recevoir le médium à nettoyer.

3. Dispositif selon l'une au moins des revendications 1 ou 2, ***caractérisé en ce que*** le contenant (6) pour recevoir le médium à nettoyer comporte une zone (8) supérieure cylindrique à laquelle est accolée une zone conique (10) à laquelle est accolé un fond (11).

4. Dispositif selon la revendication 3, ***caractérisé en ce qu*'**une sortie (13) est prévue près du fond (11).

5. Dispositif selon l'une au moins des revendications 1 à 4, ***caractérisé en ce que*** le contenant (9) pour recevoir le médium nettoyé comporte un fond oblique (7).

6. Dispositif selon la revendication 5, ***caractérisé en ce qu*'**un organe de vidange (14) est associé au fond oblique (7).

7. Dispositif selon l'une au moins des revendications 1 à 6, ***caractérisé en ce que*** le contenant (6) pour recevoir le médium à nettoyer est entouré d'un manteau cylindrique (3).

8. Dispositif selon la revendication 7, ***caractérisé en ce que*** des guidages (5.1, 5.2) pour recevoir la fourche d'un élévateur sont prévus dans la zone inférieure du manteau cylindrique (3).

9. Dispositif selon la revendication 7 ou 8, ***caractérisé en ce qu*'**un glissoir (15) pour les gâteaux de filtrage est associé au manteau cylindrique (3)

10. Dispositif selon l'une au moins des revendications 1 à 9, ***caractérisé en ce qu*'**une pompe (20) est associée au contenant (6) pour recevoir le médium à nettoyer et/ou au contenant (9) pour recevoir le médium nettoyé.

11. Dispositif selon l'une au moins des revendications 1 à 10, ***caractérisé en ce qu*'**au moins un déversoir (17) est disponible entre le contenant (6) pour recevoir le médium à nettoyer et le contenant (9) pour recevoir le médium nettoyé.

12. Dispositif selon l'une au moins des revendications 1 à 11, ***caractérisé en ce qu*'**un ou plusieurs organe(s) pour refroidir le médium est/sont prévu(s) dans le contenant (6) pour recevoir le médium à nettoyer et/ou dans le contenant (9) pour recevoir le médium nettoyé.

13. Dispositif selon l'une au moins des revendications 1 à 12, ***caractérisé en ce qu*'**au moins une cloison de séparation est prévue dans le contenant (9) pour recevoir le médium nettoyé et forme un passage avec le fond oblique (7).

14. Dispositif selon la revendication 13, ***caractérisé en ce que*** deux cloisons de séparation sont prévues en amont du lieu d'entrée du médium nettoyé.

15. Méthode pour entretenir, filtrer et/ou nettoyer un médium liquide dans un dispositif selon l'une des revendication 1 à 14, où le médium est mené d'un contenant (6) pour recevoir le médium à nettoyer, à travers l'organe de filtrage (2), jusqu'à un contenant (9) pour recevoir le médium nettoyé, où le médium à nettoyer sédimente au moins partiellement dans le contenant (6) pour recevoir le médium à nettoyer et est ensuite mené vers l'organe de filtrage (2), et où le médium nettoyé est mené de manière tangentielle dans le contenant (9) pour le médium nettoyé.
